(19) Europäisches Patentamt
European Patent Office
Office européen des brevets

(11) **EP 2 097 736 B1**

(12) **EUROPEAN PATENT SPECIFICATION**

(45) Date of publication and mention
of the grant of the patent:
**12.02.2014 Bulletin 2014/07**

(51) Int Cl.:
***G01N 21/64*** (2006.01)

(21) Application number: **07857141.1**

(86) International application number:
**PCT/EP2007/011448**

(22) Date of filing: **28.12.2007**

(87) International publication number:
**WO 2008/080612 (10.07.2008 Gazette 2008/28)**

(54) **A method of determining characteristic properties of a sample containing particles**

Verfahren zur Bestimmung der charakteristischen Eigenschaften einer Partikel enthaltenden Probe

Procédé permettant de déterminer des propriétés caractéristiques d'un échantillon contenant des particules

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 PCT/EP2006/012574**

(43) Date of publication of application:
**09.09.2009 Bulletin 2009/37**

(73) Proprietor: **Fraunhofer-Gesellschaft zur Förderung der angewandten Forschung e.V. 80686 München (DE)**

(72) Inventors:
• **MATHIS, Harald 53173 Bonn (DE)**
• **ACKERMANN, Jörg 10555 Berlin (DE)**

(74) Representative: **Lippert, Stachow & Partner Patentanwälte Postfach 30 02 08 51412 Bergisch Gladbach (DE)**

(56) References cited:
**EP-A- 1 630 547**

• **CHEN Y ET AL: "THE PHOTON COUNTING HISTROGRAM IN FLUORESCENCE FLUCTUATION SPECTROSCOPY" BIOPHYSICAL JOURNAL, NEW YORK, US, US, vol. 77, no. 1, July 1999 (1999-07), pages 553-567, XP001005983 ISSN: 0006-3495 cited in the application**

EP 2 097 736 B1

**Description**

The invention refers to a method of determining characteristic properties of a sample containing particles of at least one species which emit, scatter and/or reflect photons in an observation volume in subsequent time intervals which are fixed. Furthermore, the invention also extends to determining characteristic properties of a sample containing particles for different time intervals.

The above methods are based on fluorescence fluctuation spectroscopy (FFS) [c.f. L. Mandel: Fluctuations of photon beams and their correlations, Proc. Phys. Soc. 72, pages 1037-1048, (1958)] which has been established as a standard method in a broad field of applications especially in biophysics and biochemistry. A theory and realization developed to be applied in high throughput screening and on-line analysis is the fluorescence-intensity distribution analysis (FIDA) known from WO 98/16814 and Peet Kask, Kaupo Palo, Dirk Ullmann, and Karsten Gall: Fluorescence-intensity distribution analysis and its application in biomolecular detection technology, Proc. Natl. Acad. Sci. USA 96, pages 13765-13761, (1999).

In single molecule experiments the situation is as follows: Photons emitted from molecules in a small observation volume V hit a detector for photons. Discrete time points $t_i, i=0,1,2...$ divide the observation time into equidistant intervals $\Delta t_i=[t_{i-1},t_i)$ $(i=1,2,3...N)$. The numbers of photons counted in the time intervals $\Delta t_i$ present a sequence of numbers $\{n_1, n_2, n_3,...\}$. A completed measurement gives a finite number of counting rates $n_1, n_2,...,n_N$. The number of time intervals (#$k$) in which $n$ photons are counted gives the photon counting distribution (#$k(n)$).

Dividing each element of the sequence #$k(n)$ by the total number of intervals $N = \sum_{n=0}^{\infty} \#k(n)$ gives a real number

$$p_N(n) = \frac{\#k(n)}{N}$$

which can be interpreted - at least in the limit of a "great many" time intervals measured - as the probability to measure $n$ photon in a time interval $\Delta t$. The corresponding physical probability distribution is defined by

$$p(n) = \lim_{N \to \infty} p_N(n)$$

For simplicity we assume all photons to be produced by molecules of interest and ignore any background noise produced e.g. by the detector hardware or scattered light. Incorporating background noise is straight forward and its influence on $p(n)$ will be discussed later.

The method of determining characteristic properties of samples in FFS includes two basic steps:

1) Registering and counting the number $n_i$ (counting rate) of photon events registered in subsequent time intervals $\Delta t_i = [t_{i-1},t_i)$ $(i=1,2,3...,N)$ of an observation time $T = \sum_{i=1}^{N} \Delta t_i$ ,

2) determining a distribution function p(n) of the number n of photon events in a predetermined time interval $\Delta t$,

3) determining one or several properties of interest in a way that a given theoretical model describes the outcome of the measured $p(n)$ with optimal agreement (in the following called "fitting").

Typical properties which can be extracted from $p(n)$ include

1. the concentration of molecules in pure solutions
2. the concentration of molecules in mixtures
3. the kinetic of intermolecular binding processes
4. the kinetic rates of intermolecular dissociation processes

5. the kinetic rates of intramolecular conformal changes

6. the diffusion rates of molecules

7. the molecular brightness

8. the spatial brightness function of the optical set up

9. the life time of singlet states specific to molecules

10. the after-pulse rate of a detector

In FIDA the theoretical photon count distribution $p(n)$ is computed via the generating function

$$G(\xi) \;=\; \sum_{n=0}^{\infty} p(n)\xi^n.$$ $G(\xi)$ is expressed as the exponential of spatial integrals over a function depending on a so-called spatial brightness function $B(\vec{r})$. The spatial brightness function is the product of the excitation light intensity and transmission coefficient of fluorescent light by the optical equipment as a normalized function of coordinates of a particle in the sample. A simple model for $B(\vec{r})$ is applied to characterize the optical equipment, and adjustment parameters of $B(\vec{r})$ are determined by experiments on single species. The unknown model parameters, the concentration $c$ and a specific brightness value $q$, are determined either by a non-linear fitting procedure or by an inverse transformation with regularization. Disadvantages of FIDA are

1. The generating function approach makes the theoretical model not very intuitive, and the extension of the method to more complex applications is difficult.

2. The model is highly non-linear in the unknown parameters c and q and the determination of these parameters is complicated.

3. The brightness of each molecule is expressed as a product of a spatial brightness function, which is common to all species, and a specific brightness, which has a characteristic value for each species. Since triplet state population differs significantly for different species this assumption is violated to some extent in all measurements.

4. The coordinates of the molecules are assumed not to change during the counting time interval (bin width). Even for a very short time interval in the range of a few $\mu$s this is only a crude approximation. Moreover the dependence of $p(n)$ on the diffusion movements of the molecules bears useful information which cannot be extracted from the model.

By the introduction of semi-empirical correction factors in FIDA a so-called fluorescence intensity multiple distribution analysis (FIMDA) has been developed for a concurrent determination of diffusion times and molecular brightness [c.f. Kaopo Palo, Ülo Mets, Stefan Jäger, Peet Kask, and Karsten Gall: Fluorescence intensity multiple distribution analysis: Concurrent determination of diffusion times and molecular brightness, Biophysical J. 79, pages 2858-2866, (2000)]. Compared to FIDA, the direct calculations of photon count distributions via Master equations show a significantly improved fit quality. Such numerical simulations, however, are very slow and not suited for high throughput applications [c.f. Kaopo Palo, Ülo Mets, Vello Loorits, and Peet Kask: Calculation of photon count number distributions via master equatons, Biophysical J. 90, pages 2179-2191, (2006)].

Methods alternative to FIDA and its successors are based on the photon count histogram PCH algorithm [c.f. European patent application EP 1 630 547 A, Yan Cheng, D. Müller Joachi, Peter T. C. So, and Enrico Gratton: The photon counting histogram in fluorescence fluctuation spectroscopie, Biophysical J. 77, pages 553-557, (1999), Yan Cheng: Analysis and applications of fluorescence fluctuation spectroscopy. PhD thesis, University of Illinois at Urbana-Champain, Urbana, Illinois, (1999), available at http://www.lfd.uiuc.edu/staff/gratton, Thomas D. Perroud, Bo Huang, and Richard N. Zare: Effect on bin time on the photon counting histogram for one-photon excitation, ChemPhysChem 6, pages 905, 912, (2005), Y. Cheng, M. Tekmen, L. Hillesheim, J. Skinner, B. Wu, and J. Müller: Dual-color photon counting histogram, Biophysical J. 88, pages 2177-2192, (2005)]. These methods differ only in technical details from FIDA and assume a different shape for the spatial laser brightness distribution. PCH methods play a minor role for commercial applications. In the PCH approach the detection volume has to be chosen rather arbitrarily. Properties like the average number of contributing molecules and the photon probability distribution of a single molecule become abstract properties without any physical meaning.

The object of the present invention is to provide an improved theoretical platform for the a priori prediction of photon counting histograms. A further object of the invention is to provide a more profound physical insight into FFS and to make the PCH approach intuitively extendable to complex experimental tasks.

The above objects of the present invention are solved by the method having the features of claim 1.

The effective volume $V_{eff}$ is not readily described by the optical set up but also depends on the properties of the particle species considered. A particle is defined to be "inside" this volume during a particular time interval if and only if it contributes to the count rate. The probability to contribute to the count rate is non-zero for a particle located at any space position. Hence the effective volume $V_{eff}$ cannot be determined by physical spatial boundaries. Nevertheless the process of "entering" and "leaving" this volume is a stochastic process similar to the diffusion process into and out of a small physical volume. Note that techniques like stimulated emission depletion (STED) [c.f. Lars Kastrup, Hans Blom, Christian Eggeling, and Stefan W. Hell: Fluorescence fluctuation spectroscopy in subdiffraction focal volume, Phys. Rev. Lett. 94, (2005)] are capable to reduce significantly the effective volume.

By definition, a "single particle" inside the effective volume cannot produce any count rate of zero. Consequently the term to have a "single particle" inside the effective volume is conceptionally very different from having a "single particle" in any spatial volume. Physically the probability distribution $P_1(n)$ can be measured in a Gedankenexperiment by considering only non-zero count rates in which all photon events during a time interval $\Delta t_i$ originate solely from a single particle. Superposition of signals originated from several particles has to be ignored.

According to the present invention, a particle species, e.g. a molecular species, is characterized for a given experimental set up by two quantities: the effective volume $V_{eff}$ and the single particle distribution $P_1(n)$. Both quantities have a defined physical meaning, as discussed above. The single particle distribution $P_1(n)$ can be distinguished from the identically named single particle distribution in the FIDA and PCH approaches by its unique property $P_1(n = 0) = 0$.

The knowledge of $V_{eff}$ and $P_1(n)$ can be utilized for a fast and robust determination of molecular concentrations in samples containing one or several species (mixtures) of molecules. The method is robust against disturbing effects as e.g. after-pulsing, molecular diffusion or singlet state excitation which limits the applicability of all previous methods as e.g. FIDA, FIMDA, or PCH algorithms. The method according to the invention is not limited as FIDA or PCH algorithms to short bin widths. It is applicable to any molecular environment as e.g. flows, micro-structures, cells, vesicles, emulsions, or gels (not experimentally verified up to now).

The method according to the present invention is more simple than all previous methods. Technically it can be combined with standard fitting methods as e.g. non-linear fits, generating functions, or method of moments. Depending on the technical realization it is a very fast method suitable for on-line diagnostics.

In FIDA a kind of molecule is characterized by a specific molecular brightness given by a real number value. According to the invention, a kind of molecule is fully characterized by $V_{eff}$ and $P_1(n)$.

The properties $V_{eff}$ and $P_1(n)$ are rich in the sense that they contain all information as e.g. diffusion rates or singlet state excitation probabilities relevant in the experimental set up. In principle all information characterizing the particles, e.g. molecules, can be extracted from $V_{eff}$ and $P_1(n)$. To get this information, however, a specific theoretical model has to be applied.

The properties $V_{eff}$ and $P_1(n)$ are pure in the sense that they characterize the properties of a single particle without any averaging process present in any experiment due to the simultaneous contributions of several particles.

In a preferred embodiment of the present invention, the single particle distribution function $P_1(n)$, based on the theory of Markov processes, is given by

$$P_1(n) = 1/V_{eff} \int_{R^3} Poi(n, \mu(\vec{r})) dV,$$

with $P_1(n=0) := 0$,

wherein $\mu(\vec{r})$ denotes the brightness function of the particle defined by the average value of photon events by a single particle at position $\vec{r}$, and the Poissonian distribution $Poi(n,\mu) = \exp(-\mu)\mu^n/n!$.

A photon count rate $n_i$ for a given bin width $\Delta t_i$ depends strongly on the positions of all molecules relative to the laser focus because of the spatially varying laser intensity and the photon collection properties of the optical set up. Molecules near the laser focus produce a high contribution to the photon count rate, whereas molecules far away from the laser focus give rise to a low or no contribution. The contribution of a single molecule can be measured by immobilizing it at a given position $\vec{r}$, on a surface (e.g. glass surface) or in a matrix (e.g. gel). The series of photons counts $n_i$ recorded

for this set up gives the probability distribution $p(n)$. The so measured average value of photon counts $\langle n \rangle = \sum_n n\ p(n)$

is called molecular brightness $\mu$ at position $(\vec{r})$. The measurement of the molecular brightness $\mu(\vec{r})$ is possible for any position $\vec{r}$, and the functional form of $\mu(\vec{r})$ can be measured by repeating this procedure for various locations of the molecule, e.q. by measuring $\mu$ for all positions $\vec{r}$ on a equidistant spatial mesh and interpolating $\mu(\vec{r})$ between the mesh points. Since the measurement of the molecular brightness function $\mu(\vec{r})$ is time consuming and expensive, it is usually approximated by models based on the theory of molecular fluorescence spectroscopy and given models of the spatial laser light intensity. In this context, the molecular brightness $\mu(\vec{r})$ depends on parameters as e.g. the bin width $\Delta t$, the spatial distribution and intensity of the light at the excitation wavelength $(\lambda)$, the collection efficiency function of the optical set up, the quantum efficiency of the detector (q), the cross section $(\sigma)$, and the fluorescence quantum yield $(\phi_f)$ of the given type of molecule. Effects like triplet state excitation and the after-pulsing of the detector have been shown to play an important role as well.

The knowledge of the molecular brightness $\mu(\vec{r})$ is inevitable for any *ab initio* prediction of experimental photon count distributions. In FIDA and PCH, theoretical models for $\mu(\vec{r})$ are applied. Free parameters in these models are determined by experiments on single species.

If it is assumed that the molecular brightness function $\mu(\vec{r})$ is known either by direct measurements or an approximation by a theoretical model, the probability $P_1(n)$ to measure *n* photons from an individual molecule is described by Mandel's classical formula [c.f. L. Mandel: Fluctuations of photon beams and their correlations, Proc. Phys. Soc. 72, pages 1037-1048, (1958)]:

$$P_1(\dot{n}) = \int_V Poi(n, \mu(\vec{r})) p(\vec{r}) dV$$

where the Poissonian distribution $Poi(n,\mu) = \exp(-\mu)\mu^n/n!$ is averaged over all possible locations of the molecule. $p(\vec{r}) = 1/V$ denotes the constant probability to find the particle at the space point $\vec{r}$. Unfortunately the above equation for

$$P_1(n) = \int_V Poi(n, \mu(\vec{r})) p(\vec{r}) dV$$

results in the simple solution $P_1(n) = \delta_{0n}$ in the limit of infinitely large integration volumes V. This reflects the physical fact that an individual molecule in an infinite volume corresponds to a zero concentration and cannot give rise to any photon count event at all. A common practice is to circumvent this drawback by introducing a large but finite volume *V*, see, for example, the discussion in Yan Cheng, Joachim D. Müller, Peter T. C. So, and Enrico Gratton: The photon counting histogram in fluorescence fluctuation spectroscopie, Biophysical J. 77, pages 553-557, (1999).

According to the present invention, the above-mentioned problem of the PCH algorithm is avoided by applying the definition of the "single molecule" in the effective volume $V_{eff}$ to Mandel's formula which then reads:

$$P_1(n) = 1/V_{eff} \int_{R^3} Poi(n, \mu(\vec{r})) dV \; ,$$

with $P_1(n=0) := 0$.

This equation establishes a relation between $P_1(n)$, $V_{eff}$ and $\mu(\vec{r})$ which may be used for determining one or the other of these characteristic properties.

Furthermore, the Poissonian approximation, based on the theory of Markov processes, leads to the following formulae for $\langle m \rangle$ and $V_{eff}$.

Taking into account non-zero concentrations c in real physical situations, the average number (m) of molecules contributing to each counting rate is given by

$$\langle m \rangle = \int_{R^3} [1 - Poi(n=0, \mu(\vec{r}))] \, cdV \; ,$$

where *cdV* denotes the number of molecules in volume element *dV* and the factor $[1 - Poi(n=0, \mu(\vec{r}))]$ describes the probability of each molecule in *dV* to give rise to at least one photon count event.

By means of the relation $V_{eff} := \langle m \rangle / c$ one obtains

$$V_{eff} = \int_{R^3} \left[ 1 - Poi(n=0, \mu(\vec{r})) \right] \quad dV \; .$$

The above equations establish theoretical relations between $\langle m \rangle$, $\mu(\vec{r})$ and $c$, as well as between $V_{eff}$ and $\mu(\vec{r})$, respectively, which may be used for determining one or the other of these characteristic properties.

In most applications of FFS, the particles (molecules) of the same species are fluorescent or fluorescently labelled, and a laser beam is used for the excitation of the particles.

The maximum value of the brightness function $\mu(\vec{r})$ is determined by the first moment $v_1(p)$ and the second moments $v_2(p)$ of the distribution function

$$\mu_{max} = \frac{v_2(p) - v_1^2(p) - v_1(p)}{v_1(p)} \; .$$

The significants of the method of moments as an alternative procedure for the non-linear fit procedure is further considered below.

If the noise contribution $\langle n \rangle_{noise}$ is taken into account, the maximum value of the brightness function $\mu(\vec{r})$ is modelled by a superposition of different brightness functions

$$\mu(\vec{r}) = \sum_j a_j \mu_j(\vec{r})$$

with parameters $a_j$ and different brightness functions $\mu_j(\vec{r})$ $(j=1,2,...,K)$.

Alternatively the brightness function $\mu(\vec{r})$ can be modelled by a superposition modelled by a superposition of different brightness functions

$$\mu(\vec{r}) = \sum_j a_j \mu_j(\vec{r})$$

with parameters $a_j$ and different brightness functions $\mu_j(\vec{r})$ $(j=1,2,...,K)$.

Each brightness function $\mu_j(\vec{r})$ $(j=1,2,...,K)$ is determined by a given number of $M$ characteristic parameters $\mu_{jk}$ $(k=1,2,...,M)$.

A popular model for the brightness function is the spatial Gaussian profile

$$\mu(\vec{r}) := \mu_{max} \exp(-2r^2 / a^2) \, ,$$

where $\mu_{max}$ is the brightness of a molecule in the center of the laser focus and $a$ denotes the waist parameter of the laser beam. The limitation of such a bold approximation to account for the rather complex three-dimensional spatial brightness function has been demonstrated by several groups, see Bo Huang, Zhomas D. Perroud, and Richard N. Zare, Photon counting histogram: One-photon excitation, ChemPhysChem 5, pages 1323-1331, (2004) and literature therein. A few remarks are appropriate to justify this choice as an illustrative example. Firstly, the present invention our approach may be applied to any spatial brightness function.

Secondly, approximations by Gauss functions are usually easy to handle and contractions of Gauss functions have been proven to converge to any integrable spatial function [c.f. Bruno Klahn and Werner A. Bingel: The convergence of the Raleigh-Ritz Method in Quantum Chemistry, Theoret. Chim. Acta 44, pages 9-43, (1977)]. This is one of the reasons why they have been applied extensively in modern quantum chemistry for decades.

Inserting the Gaussian profile into the definition of the effective volume and the single molecule function, respectively, a transformation of coordinates $r \rightarrow \mu$, and the integration over the rotational symmetry yield

$$V_{\mathit{eff}} = \frac{\pi a^3}{\sqrt{2}} F(\mu_{\max}) \, ,$$

and

$$P_1(n) = \frac{1}{n! F(\mu_{\max})} Q(n, \mu_{\max})$$

with

$$F(\mu_{\max}) := \int_{\mu_{\max}}^{0} \frac{1 - e^{-\mu}}{\mu} \sqrt{\ln(\mu / \mu_{\max})} d\mu \, ,$$

and

$$Q(n, \mu_{\max}) := \int_{\mu^{\max}}^{0} e^{-\mu} \mu^{n-1} \sqrt{\ln(\mu / \mu_{\max})} d\mu . \, .$$

Numerical Romberg integration may be applied to compute the functions $F$ and $Q$. Note, that $Q$ is finite only for $n \geq 1$ and diverges for $n=0$. For a Gaussian shaped $\mu(\vec{r})$ the effective volume $V_{eff}$ becomes identical to the corresponding detection volume in FCS $V_{fcs} = \pi^{\frac{3}{2}} a^3$ for $F(\mu_{\max}) = \sqrt{2\pi}$ , i.e. for certain values of $\mu_{\max}$, $P_1(n)$ can be calculated in a numerically stable and fast way for any $\mu_{\max}$ and has a defined physical meaning.

A more precise modelling of the brightness function $\mu(\vec{r})$ is performed by a superposition of Gaussian profiles

$$\mu(\vec{r}) = \sum_j \mu_{j1} \quad \exp(-2r^2 / \mu_{j2}^2)$$

with parameters $\mu_{j1}$ and $\mu_{j2}$ ($j=1,2,...,K$).

The characteristic parameters $\mu_{jk}$($j=1,2,...,K; k=1,2,...,M$) are determined by a standard deconvolution method.

The characteristic parameters $\mu_{jk}$($j=1,2,...,K;k=1,2,...,M$) can also be determined by the interative Richardson-Lucy-deconvolution algorithm.

The theoretical computation of the single molecule function $P_1(n)$ and $V_{eff}$ as described above is based on the classical Mandel formula. This formula, however, has certain limitations. The distribution of the photons count rates may deviate from a Poisson distribution $Poi(n, \mu(\vec{r}))$, because the rate of production of photons may vary during the time interval $\Delta t$. Several effects may cause such a variation of the photon production rate. A single molecule, starting at time point $t$ at position $\vec{r}$, may move and the molecule may visit other locations during the time interval $\Delta t$. Since the spatial laser intensity varies, this diffusion process, for example, may lead to a significant non-constant photon production rate and a break down of the Mandel formula. In such cases the Poisson distribution in the formula of Mandel has to be replaced by a more general distribution $p(n,\vec{r})$

$$P_1(n) = 1/V_{\mathit{eff}} \int_{R^3} p(n,\vec{r}) dV$$

for n>0 and $P_1(n=0):=0$. The effective volume is given by

$$V_{eff} \quad : \quad = \quad \int_{R^3} (1 - p(n = 0, \vec{r}))\, dV \quad .$$

$p(n,\vec{r})$ is the distribution of the number of photon events counted during the time interval $t \in [t_0, t_0+\Delta t)$ for a single molecule located at time point $t_0$ at position $\vec{r}$. The computation of the distribution $p(n,\vec{r})$, in general, is a theoretical task. To account for the diffusive motion of the molecule, the distribution $p(n,\vec{r})$ may formally be written in the form:

$$p(n,\vec{r}) \quad = \quad \lim_{N\to\infty} \int_{R^3} \quad dV_0 \prod_{j=1}^{N} dV_i G(|\vec{r}_j - \vec{r}_{j-1}|, \Delta t / N)$$

$$Poi(n, 1/(N+1)\sum_{i=0}^{N} \mu(\vec{r}_i))$$

Where G denotes the Greens function of the diffusion

$$G(x,\tau) := 1/[4\pi D\tau]^{3/2} \quad e^{-x^2/(4D\tau)} \quad .$$

In the limit of slow diffusion $D\to 0$ the traditional Mandel formula is obtained via

$$\lim_{D\to 0} \quad p(n,\vec{r}) = \quad Poi(n, \mu(\vec{r}))$$

This example shows how the concept of a single particle distribution function $P_1(n)$ introduced above can easily be extended to complex measurement conditions. It should be noted, however, that $P_1(n)$ and $V_{eff}$ may be determined experimentally in cases where theoretical considerations are not reachable.

Starting from the single particle probability distribution $P_1(n)$, the connection between $P_1(n)$ and a measured distribution function $p(n)$ is obtained as follows.

In real physical situations, the average number of $\langle m \rangle = cV_{eff}$ particles contributes simultaneously to the signal. Making use of the theory of Markov processes, the probability distribution $p(n,c)$ for a given concentration c is determined by the summation over all $m$-particle contributions

$$p(n,c) = \sum_{m=0}^{n} Poi(m, \langle m \rangle) P_m(n) \ ,$$

where $P_m(n)$ denotes the mth convolution of the single particle probability distribution $P_1(n)$

$$P_m(n) = \sum_{i=1}^{n-1} P_{m-1}(n-i) P_1(i) \qquad m = 2,3...,$$

and $P_0(n) = \delta_{n0}$. Alternatively, $p(n,c)$ may be computed via the recurrence formula:

$$p(n,c) = \frac{cV_{eff}}{n} \sum_{i=1}^{n} iP_1(i)p(n-i,c) ,$$

with

$$p(n = 0,c) = \exp(-cV_{eff}) .$$

Ignoring back ground noise, the concentration of particles is completely determined by the probability to get the count rate zero:

$$c = -\ln(p(n = 0,c))/V_{eff} .$$

If background noise is taken into account, the concentration c of particles is determined by the probability to get the count rate zero and the noise contribution $\langle n \rangle_{noise}$:

$$c = \left[ -\ln(p(n = 0,c)) - \langle n \rangle_{noise} \right] / V_{eff} .$$

The average number of particles (m) is determined by the probability to get the count rate zero:

$$\langle m \rangle = -1n(p(n = 0,c)).$$

Taking into account the noise contribution the average number of particles $\langle m \rangle$ is determined by :

$$\langle m \rangle = -1n(p(n = 0,c)) - \langle n \rangle_{noise} .$$

The probability single particle distribution function $P_1(n)$ can be computed via the recurrence formular:

$$P_1(n) = \frac{1}{p(0,c)} \left[ \frac{p(n,c)}{\langle m \rangle} - \frac{1}{n} \sum_{i=1}^{n-1} iP_1(i)p(n-i,c) \right] .$$

The distribution $p(n,c)$ may have to be convoluted with a Poisson distribution $Poi(n,\langle n \rangle_{noise})$ to account for additional background signals (e.g. random noise of the hardware):

$$p_{tot}(n,c,\langle n\rangle_{noise}) = (p(c) \otimes Poi(\langle n\rangle_{noise}))(n) \ .$$

According to the above theoretical considerations, a sample containing fluorescent particles (e.g. molecules) is characterized for a given experimental set up by the concentration c, the brightness function $\mu(\vec{r})$, the effective volume $V_{eff}$ and the single particle distribution $P_1(n)$. Since a noise contribution $\langle n\rangle_{noise}$ cannot be neglected in most experimental set ups it has to be considered as well. Following the convention described in FIDA and the PCH algorithms these parameters can be determined by a nonlinear multi-parameter fit procedure, e.g. a Marquard-Levenberg algorithm or any other numerical standard fit method appropriate for this task. Therefore the brightness function $\mu(\vec{r})$ has to be approximated by an analytical function with a number of adjustable parameters. The analytical form of $\mu(\vec{r})$ can be chosen as a Gaussian function, like in the above example, a contraction of several Gaussian functions or any other appropriate shape function.

All adjustable parameters of $\mu(\vec{r})$, as well as the concentration c, and the noise contribution $\langle n\rangle_{noise}$ have to be determined by a non-linear fit of the theoretical model to the measured distribution $p(n)$. The effective volume $V_{eff}$, and the single particle distribution $P_1(n)$ follow directly by integrating $\mu(\vec{r})$ as described above.

An alternative procedure for the non-linear fit procedure is the method of moments which utilizes a pre-calculated list of moments to be expected for any set of values for the adjustable parameters of $\mu(\vec{r})$, the concentration c, and the noise contribution $\langle n\rangle_{noise}$. Since such a list can be calculated and stored in advance for appropriated ranges of the parameters, this is the fastest possible procedure for on-line applications. The moments of a distribution $p(n)$ are defined by

$$v_i = \sum_{n=0} p(n)n^i \ .$$

Let $a_i$, $i$=1,2,...,$k$ denote the k parameters to be determined. Within an appropriate range of values of the parameters $a_i$ the expected moments $v_i$, $i$=1,2,...,$l$ can be calculated. Precalculation of the first $l$ moments $v$ for all possible sets of parameter values $a_i$, $i$=1,2,...,$k$ yields a mapping

$$(a_1,a_2,...,a_k) \rightarrow (v_1,v_2,...,v_l) \ .$$

A grid of discrete parameter values reduce the computational effort, and expected moments for parameter values not on this grid have to be extrapolated, e.g. by a spline extrapolation. The number of moments $l$ is chosen as low as possible but sufficiently high to guarantee the above mapping to be a bijective function. The mapping can then be inverted to

$$(v_1,v_2,...,v_l) \rightarrow (a_1,a_2,...,a_k)$$

which gives the demanded parameters for any set of measured moments, $\mu i, i$=1,2,...,$l$.

The moments of the probability single particle distribution function are computed via the recurrence formula:

$$v_k(P_1) = \frac{1}{\langle m\rangle}\left[v_k(p) - \langle n\rangle_{noise} - \sum_{l=1}^{k-1}\binom{k-1}{l-1}v_{k-l}(p)\{\langle n\rangle_{noise} + \langle m\rangle v_l(P_1)\}\right]$$

The noise contribution $\langle n\rangle_{noise}$ can be measured directly for an experimental set up by using the medium liquid of the sample without fluorescent particles. The medium liquid of the sample may be replaced by a liquid having identical or similar (optical) properties. Determining $\langle n\rangle_{noise}$ in advance, this parameter can be kept fixed in the non-linear fit procedure and the method of moments. In this way, the number of demanded parameters in these procedures is reduced by one.

The above considerations concern a sample of particles of a single species.

The present invention straightforwardly also applies to samples containing N different species of particles (a mixture of particle species).

In the case of a mixture of particle species the determination of the concentration of each species is done in a multi-step procedure. First the effective volume $V_{eff}^{(s)}$ and a single particle distribution $P_1^{(s)}(n)$ have to be measured for each species s present in the mixture and the given experimental set up. This is done by one of the procedures described above.

Based on determined properties $V_{eff}^{(s)}, P_1^{(s)}(n)$ the expected total distribution $p(n;c_1,c_2,...,c_N)$ of the number n of photon events in a predetermined time interval $\Delta t$ of the mixture can be expressed by the convolution of the single species contributions $p^{(s)}(n;c_s)$, s=1,2,...,N :

$$p(n;c_1,c_2,...,c_N) =$$

$$p^{(1)}(n;c_1) \otimes p^{(2)}(n;c_2) \otimes \cdots \otimes p^{(N)}(n;c_N) \otimes Poi(n,\langle n \rangle_{noise}) \; .$$

Parameters to be determined are the concentrations $c_s$, s=1,2,...,N and the noise contribution $\langle n \rangle_{noise}$.

The demanded parameters can be determined by using a non-linear fit of the measured data to the theoretical models. Similarly to the non-linear fit procedure described above, standard numerical techniques can be applied. A generating function approach may speed up the computation of $p(n;c_1,c_2,...,c_N)$ in some cases.

Alternatively to the non-linear fitting, the parameters can be determined by the method of moments as described above. This procedure is technically simplified by the fact that the moments of $p(n;c_1,c_2,...,c_N)$ can be expressed as products of the moments of $p^{(s)}(n;c_s)$ for s=1,2,...,N .

A measurement of $V_{eff}$ and $P_1(n)$ is possible without any model or knowledge on the molecular brightness function. These properties may be determined by an analysis of the measured distribution $p(n,c)$ directly. Since a measured distribution is noisy data, the effect of error propagation can destabilize numerical methods for the extraction of $P_1(n)$. For this reason a global representation of $P_1(n)$ is advantageous. A powerful method is a so-called discrete Galerkin approximation of the form

$$P_1(n) = \sum_{k=0}^{\infty} a_k \Psi(n, p, \lambda) \quad l_k(n, p, \lambda)$$

where $a_k$ are generalized moments, $\Psi(n,p,\lambda)$ is a weighting function with adjustable parameters p and $\lambda$, and $l_k(n,p,\lambda)$ are the corresponding polynomials. The parameters p and $\lambda$ are determined by the first moments of $P_1(n)$. Such error controlled Galerkin projections are well-studied methods in numerical mathematics and usually applied to polymer chemistry [s.f P. Deuflhard and J. Ackermann: Adaptive Discrete Galerkin Methods for Macromolecular Processes, in H.P. Dikshit and Charles A. Michelli, editors: Advances in Computational Mathematics, World Scientific Publishing Co., Inc., (1993); J. Ackermann and M. Wulkow: MACRON - A Program Package for Macromolecular Reaction Kinectics, Konrad-Zuse-Zentrum, Preprint SC-90-14, (1990), M. Wulkow and J. Ackermann: Numerical Simulation of Macromolecular Kinetics - Recent Developments, IU-PAC Working Party, Macro group, (1990); M. Wulkow and J. Ackermann: The Treatmeant of Macromolecular Processes with Chain-Length-Dependent Reaction Coefficients - An Example from Soot Formation, Konrad-Zuse-Zentrum Berlin, Preprint-91-18, (1991); U. Budde and M. Wulkow: Computation of molecular weight distributions for free radical polymerization systems, Chem. Ing. Sci. 46, pages 497-508, (1991), M. Wulkow: Numerical Treatment of Countable Systems of Ordinary Differential Equations, Thesis and Technical Report-90-8, Konrad-Zuse-Zentrum Berlin, (1990); M. Wulkow: Adaptive Treatment of Polyreactions in Weighted Sequence Spaces, IMPACT Comput. Sci. Engrg. 4, pages 152-193, (1992)]. The parameters of this approximation can be obtained from $p(n,c)$ either by a fitting procedure (see above-described non-linear multi-parameter fit procedure) or by a momentum method analogously to the above-described method of moments.

A useful property in this context is the averaged molecular brightness producing n photons defined by

$$\langle\mu\rangle_n := \frac{\int_{\mathbb{R}^3} Poi(n,\mu(\vec{r}))\mu(\vec{r})dV}{\int_{\mathbb{R}^3} Poi(n,\mu(\vec{r}))dV} .$$

$\langle\mu\rangle_n$ characterizes the spatial brightness $\mu(\vec{r})$ in terms of effective photon production rates and is connected to the probability distribution $P_1(n)$ through

$$\langle\mu\rangle_n = \frac{(n+1)P_1(n+1)}{P_1(n)} .$$

Typically, the molecular brightness increases linearly $\langle\mu\rangle_n \approx n$ for low count rates $n$ and becomes constant at the maximum molecular brightness of one molecule in the center of the excitation light focus. This property makes the single molecule signal well distinguishable from random noise signal which would give a constant distribution $\langle\mu\rangle_n = constant$.

The foregoing and other objects, aspect and advantages of the invention will be better understood on the basis of the following three examples where a polystyrene micro spheres suspension series, a dye Rhodamine 6G dilution series as well as a mixture of a polystyrene micro spheres and Rhodamine 6G dye are analyzed. A prior art fluorescent spectroscopy unit comprising a light source emitting 532 nm excitation light at an intensity of 50 $\mu$W, a built-in high sensitive photomultiplier tube as well as a digital correlator has been employed to collect the experimental data. The fluorescent spectroscopy unit used has a reaction time of 30 nsec. Data acquisition has been accomplished by counting clock pulses between two successive photon registrations. On the basis of such collected data, several light intensity traces may be calculated for different bin widths $\Delta t$.

Example 1: Micro spheres suspension series

As a first example, an analysis of a fluorescent polystyrene micro spheres suspension series has been conducted.

Figure 1 shows a typical light intensity trace recorded over 3,2 sec for a sample containing polystyrene micro spheres (beads) with a molar concentration $c_M \approx$ 1,9E-10 Mol/L.

Figure 2 shows an autocorrelation curve (averaged over 100 traces a 3.2 sec as shown in Fig. 1).

Figure 3 shows the corresponding photon count distribution $p(n,c)$ for a bin width $\Delta t$ = 0,1 msec.

Figure 4 shows the numbers of molecules obtained by fluorescence correlation spectroscopy (FCS) (broken lines) as well as obtained by methods according to present invention (solid line) for various samples. As reference, the theoretical drop down slope is also shown (unconnected squares).

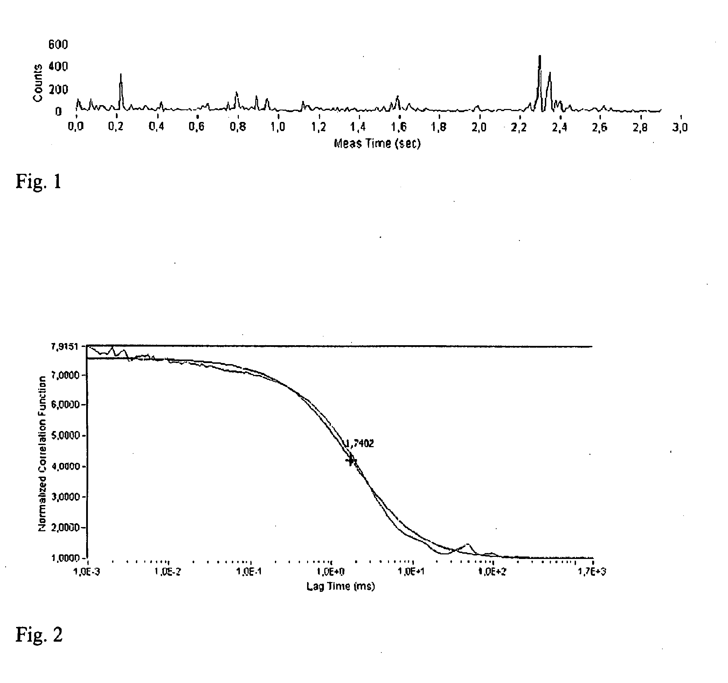

Figure 1 shows a typical light intensity trace recorded for a sample containing 0,014 $\mu$m beads of known molar concentration $c_M \approx$ 1,9E-10 Mol/L. The bin time has been adjusted to 1 msec. The intensity peaks indicate the transition of molecules through the confocal FCS volume.

Figure 2 shows the corresponding autocorrelation curve (averaged over 100 loops a 3.2 sec). A fit lead to a diffusion time of $\tau$=1,74 msec and n=0,1529 beads in the confocal FCS volume. The diffusion time averaged over several FCS measurements gives $\tau$=1,91 $\pm$ 0,33 msec. This diffusion time determines the period of time a bead requires passing through the confocal FCS volume. According to manufacturer information, the fluorescent spectroscopy unit employed has a FCS volume of $V_{FCS} \approx$ 1 femto liter (fL).

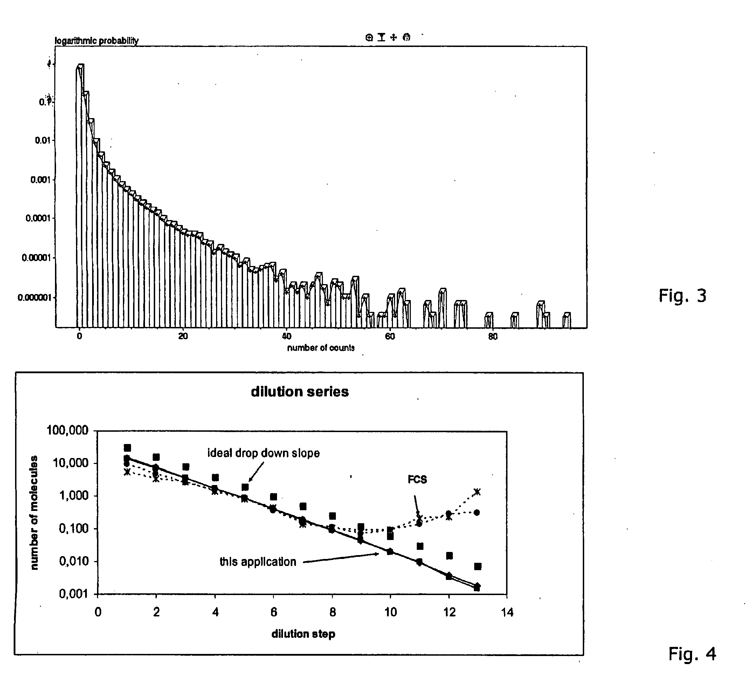

Figure 3 shows the corresponding photon count distribution $p(n,c)$ for the bin width $\Delta t$ = 0,1 msec. The probability $p(n=0,c)$= 0,79976 means that around 80% of all photon counts in figure 1 are zero. A measurement with pure water gives the background noise level of $<n>_{noise}$ = 0,0230642.

According to the present invention, the average number of molecules $<m>$ in the effective volume $V_{eff}$ is given by above formula

$$c \ V_{eff} \ = \ <m> \ = \ - \ ln(p(n=0,c)) \ - \ <n>_{noise} \ = \ 0,20038.$$

Consequently, the effective volume $V_{eff}$ according to the present invention turns out to be in the order of magnitude of ($c_M$ = 1,9E-10 Mol/L, $N_A$= 6.022E23)

$$V_{eff} \ = \ <m> \ / \ (c_M \ N_A \ ) \ \approx \ 1,75 \ fL$$

and hence is slightly larger than the confocal FCS volume. Note, that the value of $V_{eff}$ may be decreased (enlarged) by reducing (increasing) either the bin width$\Delta t$ or the excitation light intensity, data not shown. In general, $V_{eff}$ depends on apparatus parameters as well as on molecule parameters.

In figure 4 the numbers of molecules obtained by standard FCS analysis are shown (broken lines) for various samples. Two measurements have been performed for each sample; each measurement is indicated by dots (measurement I) and stars (measurement II), respectively. The series of measurements starts (step 1) at the initial solution of predetermined $c_M$ = 2,44E-8 Mol/L.

This initial solution is diluted in twelve steps by a "mix and split" method. A sample of 50 $\mu$L is diluted with 50 $\mu$L water; half of the resulting 100 $\mu$L is taken for measurements and the other half serves as sample for the next "mix and split" step. Ideally, the concentration of micro spheres drop by a factor of two by each dilution step. The lowest concentration of micro spheres is reached in step 13, resulting to $c_M$ = 3E-12 Mol/L. In the logarithmic scale of figure 4 the number of beads obtained by the standard FCS should drop down linearly as indicated by the unconnected squares.

Small deviations from this theoretical behaviour may result from uncertainties in the handling of small volumes during the series of "mix and split" steps. However, it is obvious that the results of two measurements of the same sample conducted by standard FCS vary between 10% and 50%. This variation indicates a rather large statistical error of determined number of beads as well as a similar uncertainty of the concentration obtained by the FCS. More drastically, however, is the behaviour of FCS for low concentration. For concentrations lower than $c_M$ =3,8E-10M the FCS method is unable to determine the correct concentration and gives erroneous high values. The FCS gives a value of two orders of magnitude too high for the sample in dilution step 13. This behaviour of FCS discussed above is well known and presents a serious.limitation of the FCS method especially for low concentrations.

In the following, it will be seen, that the inventive method results in much more precise determination of the number of fluorescent particles with respect to prior art FCS method. According to the present invention the concentration of fluorescent particles, i.e. the number of particles <m> in $V_{eff}$, can be determined by p(n=0,c), see above. Note, that p(n=0,c) can be measured with a high statistical precision in the low concentration regime. The corresponding numbers of molecules are shown in figure 4 (solid lines).

The inventive method has been applied to the same acquisition data records used by the FCS method. Accordingly, no additional measurements have been performed to obtain these results by the inventive method. Compared to the values derived by FCS, the statistical variation of <m> is much lower (between 1% for concentrations around $c_M$ =5E-10 Mol/L and 10% for the lowest concentration $c_M$ =3E-12M). More important, the measured concentration follows the correct theoretical linear drop down slope and no detection limit is visible down to a concentration of $c_M$ =3E-12M.

Example 2: Dilution series of the dye Rhodamin 6G

Similar results have been obtained for a dilution series of the dye Rhodamin 6G (identical conditions as above for example 1). Here the detection limit of the FCS is determined by the sensitivity of the apparatus and is in the order of $c_M$ =3E-9 Mol/L. The present invention turns out to enable the measurement of the concentration with precision of 2% even below the detection limit of the FCS, data not shown. For Rhodamin 6G the value for the effective volume reduces to $V_{eff} \approx$ 0.2 fL for given apparatus parameters of the fluorescent spectroscopy unit.

In order to increase the statistical significance of the photon count signals produced by fluorescent particles it may be advantageous to choose a rather large bin width. Compared to standard analysis methods and their successors the present invention enables the determination of very low concentrations with superior simplicity and precision.

Example 3: Mixture of Beads and Rhodamin 6G

Measurements of a sample containing a mixture of beads and dye Rhodamin 6G (Rh6G) gives an average number of particles of <m> = 2,2 in the effective volume (experimental conditions as above). This value is similar to the FCS value of $<m>_{FCS}$ = 2,35. A two parameter FCS, however, is unable to determine the concentration of each species separately. According to the present invention the concentration of beads and Rh6G can be determined by various methods. One way is to utilize the methods of moments.

The first moments of the single molecule distributions for beads and Rh6G, $v_1(P_1^{(beads)})$=1,55 and $v_1(P_1^{(Rh6G)})$ =1,06, are computed from the measurements described in above example 1 and example 2 , respectively. Therefore the relation

$$v_1(p_{tot}) =<n>_{noise} + <m> v_1(P_1)$$

between the first moment of the measured distribution $v_1(P_{tot})$ and the moment of the single molecule distribution $v_1(P_1)$ is applied. Note, that the values $v_1(P_1^{(beads)})$ and $v_1(P_1^{(Rh6G)})$ characterize each species independent of its actual concentration. The first moment of the single molecule signal obtained for the mixture gives $v_1(P_1^{(beads+Rh6G)})$=1,30 and fit neither to the moment of the beads nor to the moments of the dye. To compute $v_1(P_1^{(beads+Rh6G)})$ the relation

$$v_1(p_{tot}^{(beads + Rh6G)}) =<n>_{noise} + $$
$$(<m>^{(beads)} + <m>^{(Rh6G)}) * v_1(P_1^{(beads + Rh6G)})$$

is applied. The portion

$$x :=<m>^{(beads)} /(<m>^{(beads)} + <m>^{(Rh6G)})$$

of beads contribution to the signal in the mixture is easily determined by the relation

$$v_1(P_1^{(beads + Rh6G)}) = x * v_1(P_1^{(beads)}) + (1-x) * v_1(P_1^{(Rh6G)})$$

We obtain

$$<m>_{beads} = x*<m> = 0,95$$

$$<m>_{Rh6G} = (1-x)*<m> = 1,25$$

The resulting concentrations (in mol/L) are

$$c_M (beads) = <m>_{beads} /(V_{eff}(beads)*N_A) \approx 1E-9 \ Mol/L$$

$$c_M \text{ (Rh6G)} = \langle m \rangle_{Rh6G} / (V_{eff}(Rh6G) * N_A) \qquad \approx 1E-8 \text{ Mol/L}$$

The concentrations measured for a dilution series of this sample reproduce the correct concentration drop down for both species, data not shown.

A alternative method to determine the ratio x is the comparison of the first nonzero components of the single molecule distribution $P_1(n=1)$ of beads, Rh6G and the mixture, respectively.
The relation

$$p_{tot}(1) = \langle m \rangle \exp(-\langle m \rangle - \langle n \rangle_{noise}) P_1(1) + \langle n \rangle_{noise} \exp(-\langle n \rangle_{noise})$$

has been applied to obtain the single molecule distribution $P_1(1)$ from the measured $p_{tot}(n=1)$. The ratio x is determined via

$$x = [ P_1(1)^{(beads+Rh6G)} - P_1(1)^{(Rh6G)} ] / [ P_1(1)^{(beads)} - P_1(1)^{(Rh6G)} ]$$

leading to a value of $x \approx 0.36 \pm 0.15$. Both methods described above enable the distinction of mixtures from pure solutions and to determine the order of magnitude of the concentration of each species in the mixture.

The above-described method and examples apply to a fixed bin time $\Delta t$ for the determination of characteristic properties of a sample containing particles. These properties rely on the photo-physical attributes of molecular species which can be extracted from the light intensity trace recorded for a given bin time. The choice of the bin width $\Delta t$ therefore has an influence on the results obtained by the above described method:

The present invention extends to a further method for determining an appropriate or optimal bin width and for determining characteristic properties $E_1,...E_L$ of a sample containing one species of particles or a mixture of several different species of particles as a function of $\Delta t$.

The dependence of the method on the bin width $\Delta t$ can be utilized to characterize a molecular species by its dynamic properties, e.g. by its diffusion time.

A standard method for the measurement of diffusion time is the fluorescence correlation spectroscopy (FCS) which utilizes the time behaviour of the light trace, but ignores the different photo-physical attributes of species. Consequently, the application of the FCS method becomes difficult when molecular species of different brightness are present in the sample [c.f. E. Van Craenenbroeck, G. Matthys, J. Beirlant, and Y. Engelborghs: "A statistical analysis of fluorescence correlation data": Journal of Fluorescence, 9, pages 325-331, 1999]. The effect of the bin time on the parameters of the PCH approach [Thomas D. Perroud, Bo Huang, Ricard N. Zare, "Effect of bin time on the photon counting histogram for one-photon excitation", ChemPhysChem: 6, pages 905-912, (2005)] and the parameters of FIDA [Kaupo Palo, Ülo Mets, Stefan Jäger, Peet Kask, and Karsten Gall: "Fluorescence intensity multiple distributions analysis: Concurrent determination of diffusion times and molecular brightness", , Biophysical Journal, 79, pages 2858-2866 (2000)];" are described in the literature. These approaches are called time-dependend photon counting multiple histograms (PCMH) and fluorescence intensity multiple distribution analysis (FIMDA), respectively. The PCMH and the FIMDA have been applied to measure simultaneously the diffusion time and the molecular brightness of molecular species. The applications of FIMDA for the determination of concentration from mixtures and for the determination of binding constant of protein-ligand interaction have been demonstrated.

The applications of FIMDA as well as the applications of the PCMH have several drawbacks.

    1. The determination of the molecular brightness for each bin width requires a complicated, time consuming, and numerically unstable nonlinear fitting procedure.
    2. Both methods rely on complicated formulas to describe the dependencies of the model parameters on the bin width.
    3. Moreover, these formulas are based on unsaved ad hoc assumptions.

The further method according to the present invention concerns the determination of characteristic properties of a sample containing particles as described by the above first method according to the invention for a series of different time widths $\Delta t$. The characteristic properties determined for a fixed bin width are herein understood as function of the bin width $\Delta t$.

The further method of the present invention, hence, comprises the following steps:

1) registering and counting the number $n_i$ (counting rate) of photon events registered in subsequent predetermined time intervals $\Delta t_i=[t_{i-1},t_i)$ ($i=1,...,N$) of an observation time $T = \sum\limits_{i=1}^{N} \Delta t_i$, wherein $\Delta t_i=:\Delta t=$ constant,

2) determining a distribution function p(n) of the number n of photon events in the predetermined time interval $\Delta t$ and

3) performing the other steps of the above-described first method according to the invention;
and the further steps of:

4) repeating the steps 1) to 3) K times with different time intervals $\Delta t^k$ ($k=1,...,K$) and determining the same characteristic properties $E_1,...,E_L$ by each series of these steps,

5) determining the dependency of the properties $E_1,...,E_L$ on $\Delta t^k$, and

6) determining an appropriate or optimal $\Delta t$ or other characteristic properties of the particles from the measured dependency according to step 5)

The knowledge of the characteristic properties as function of the bin time $\Delta t$ can be utilized

1. to chose one appropriate or optimal value for the bin time of the first method according to the invention described above,
2. to characterize a molecular species,
3. to obtain another characteristic properties by fitting a given analytical function to the measured dependency,
4. to identify molecular species in mixtures and to compute their concentrations.

The time intervals (bin widths) $\Delta t^k$($k=1,...,K$) can be chosen between $10^{-6}$ seconds and a few seconds.
An example of characteristic property is the effective brightness of a single molecule which is high for short bin widths and drop down for long bin widths (c.f. Example 4. This drop down of the brightness results from the diffusion of a visible molecule away from the laser focus. Therefore, the maximum level of the brightness and the slope of the brightness characterize a molecular species.
The discrete bin widths can be chosen to be equidistant on a logarithmic scale, for instance $\Delta t^k=0,8^k$ sec with k=0,...,72.
The dependency of the maximum brightness $\mu_{max}$ on the bin width results in an experimental dying-out function which is characteristic for the brightness and size of a particular species of molecule. The calculation of such a function by means of the measured dependencies can be performed with high speed (within several seconds). Principally, such dependencies on the bin width $\Delta t$ can be determined for all properties of a single species of particles which have been described above by the first method according to the invention.
A given analytical function may be fitted to the measured dependency of a characteristic property on the bin width $\Delta t$ by standard fitting procedure.
The characteristic property may be a particular species of molecule in the sample to be measured.
Further characteristic properties may be the partial concentrations in mixtures of several species of molecules in the sample.
The measured dependency may be compared with already measured dependencies or theoretical functions in order to identify particular species of molecules or partial concentrations of molecules in the sample.
The measured dependency of a characteristic property on the bin width $\Delta t$ may be brought into accordance with the superimposition of already measured dependencies or theoretical functions by non-linear fit procedures for determining particular species of molecules for partial concentrations of molecules in the sample.
In a particular application of the method according to the invention, the distribution function $p(n^k,\Delta t^k)$ ($k=1,...,K$) is measured and the maximal brightness $\mu_{max}(\Delta t^k)$ is determined as a characteristic property from $p(u^k,\Delta t^k)$ by means of an appropriate fitting procedure.
The above method may further include determinations of $\mu_{max}(\Delta t)$ in the time limit $\Delta t\rightarrow 0$, the diffusion motion, the diffusion time $\tau_D$ and/or the structural parameter SP of the apparatus from $\mu_{max}(\Delta t)$ by an appropriate fitting function.
As a further step, the fade-out time $\tau_\mu$ and/or the fraction of a particular species of particles in the sample may be determined from $\mu_{max}(\Delta t)$.
In a further example of the method according to the invention, a sample with several species of particles may be measured wherein $\mu_{max}(\Delta t)$ is determined and the molar fractions $X_s$ of the species s in the sample are determined by previously measured or otherwise determined $\mu_{\mathrm{max},s}(\Delta t)$ via the formula

$$\mu_{\mathrm{max}}(\Delta t) = \sum_{s=1}^{S} \mu_{\mathrm{max},s}^{2}(\Delta t) \cdot X_s \; / \; \sum_{s=1}^{S} \mu_{\mathrm{max},s}(\Delta t) \cdot X_s \, .$$

Alternatively, $\mu_{\mathrm{max},s}(\Delta t)$ can be determined and the molar fractions of $X_s$ the species in the sample are determined by a non-linear fit with the parameters $0 \le X_s \le 1, (s=1,...S)$ with the boundary condition $\sum_{s=1}^{S} X_s = 1$.

In the following further Examples 4 and 5, dependencies of characteristic on the value of the bin width $\Delta t$ are illustrated.

Example 4:

An illustrative example for a characteristic property is the brightness value $\mu_{\mathrm{max}}$ computed by the formula

$$\mu_{\mathrm{max}} = \frac{v_2(p) - v_1^2(p) - v_1(p)}{v_1(p) - \langle n \rangle_{noise}}$$

where $v_1(p)$ and $v_2(p)$ are the first and second moment of the measured probability distribution. The noise contribution $\langle n \rangle_{noise}$ can be neglected in cases of high brightness, i.e. for $v_1(p) >> \langle n \rangle_{noise}$. This brightness value $\mu_{\mathrm{max}}$ computed by formula above is the maximum of a brightness function $\mu(\vec{r})$ for a Gaussian profile $\mu(\vec{r}) := \mu_{\mathrm{max}} \exp(-2r^2/a^2)$, but is a characteristic brightness value for other profile types as well.

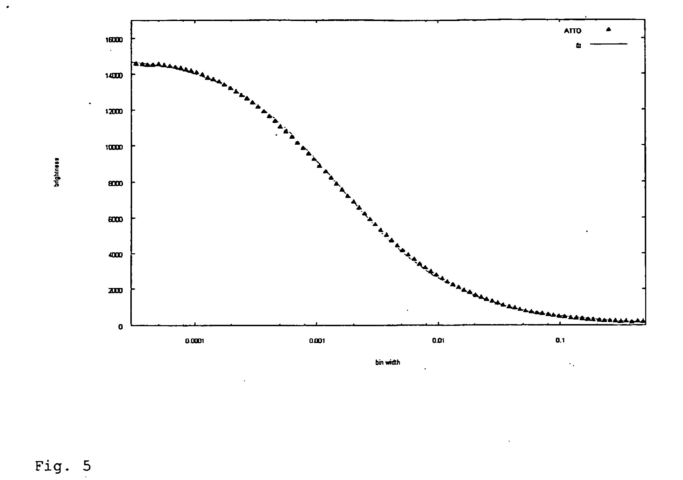

A sample containing the dye ATTO 532 (ATTO TEC, Siegen, Germany) in molar concentration of c=56E-10 M has been measured in the ConSense detection system (FluIT Biosystems, Sankt Augustin, Germany, http://www.fluit-biosystems.de). The trace of fluorescence light intensity has been recorded for three minutes and analyzed by the Virtual Lab software (FluIT Biosystems). The probability distribution $p(n,c)$ has been constructed for various bin times in the range from 1 s to a few $\mu$s ($10^{-6}$s). In particular we choose the discrete bin times $\Delta t_n = \Delta t_0 0.8^n, n=1,2,3,...,72, \Delta t_0 =1s.$. For each bin time and corresponding probability distribution $p(n,c)$ the brightness value $\mu_{\mathrm{max}}$ has been calculated via the first and second moment of $p(n,c)$, see formula above. The obtained values of $\mu_{\mathrm{max}}$ depend on the bin time applied and $\mu_{\mathrm{max}}$ is plotted versus $\Delta t$ in Figure 5. Consequently, the characteristic property $\mu_{\mathrm{max}}$ is understood as a function of $\Delta t$ which is denoted by $\mu_{\mathrm{max}}(\Delta t)$ in the following.

The maximum brightness $\mu_{\mathrm{max}}$ can be interpreted as the brightness of a single molecule in the centre of laser focus. By diffusion a single molecule located in the centre moves away from the centre and its brightness (in units counts per seconds, cps) decreases. Consequently, the measured effective maximum brightness $\mu_{\mathrm{max}}(\Delta t)$ drops down for long bin times $\Delta t$. For short bin times the effective maximum brightness becomes large.

The values for the (effective) brightness of the species depend on the bin width $\Delta t$. The curve plotted in Figure 5 may be fitted to the analytical function

$$\mu_{\mathrm{max}}(\Delta t) = \mu_{\mathrm{max}}(\Delta t = 0)\sqrt{\frac{1}{1+\Delta t/\tau_\mu}}\sqrt{\sqrt{\frac{1}{1+\Delta t/(SP*SP*\tau_\mu)}}}$$

with parameters $\mu_{\mathrm{max}}(\Delta t = 0)$, $\tau_\mu$, and $SP$. The parameters $\mu_{\mathrm{max}}(\Delta t = 0)$, $\tau_\mu$ and SP denoted the maximal brightness in the limit of short bin time, the fade-out time, and a structure parameter of the optical set up, respectively. The fit gives the brightness value $\mu_{\mathrm{max}}(\Delta t=0)$=15.1 kcps, the fade-out time $\tau_\mu$=0.731ms, and the structure parameter 2.

The brightness value $\mu_{\mathrm{max}}(\Delta t = 0)$ and the fade-out time $\tau_\mu$ are characteristic properties for a molecular species in a given optical set up. The brightness value $\mu_{max}$ ($\Delta t$ = 0) depends on the photo-physical properties of the molecules and the maximum local laser light intensity. The fade-out time $\tau_\mu$ is proportional to the diffusion constant of the molecule, i.e. to its hydro-dynamical radius, and to the dimensions of the confocal detection volume.

To illustrate the influence of the optical set up a sample containing the dye ATTO in the molar concentration 3.0·10⁻¹¹ M has been measured two times. First a pinhole of 100μm diameter has been applied to reduce background noise and the trace of fluorescence light intensity of the sample has been recorded for 3 minutes with the ConSense detection system. In a second set up the identical sample has been measured for 30 s with a pinhole of 75μm diameter instead. Both traces of fluorescence light intensity have been analyzed as described above; the brightness function obtained for both set ups are shown in Figure X1.2. The reduction of the diameter of the pinhole diameter from 100μm to 75μm leads also to a drop down of the fade-out time $\tau_\mu$ from 0.567 ms to 0.343 ms. The smaller pinhole diameter result in a smaller dimension of the detection volume and hence to a reduction of the fade-out time.

Example 5:

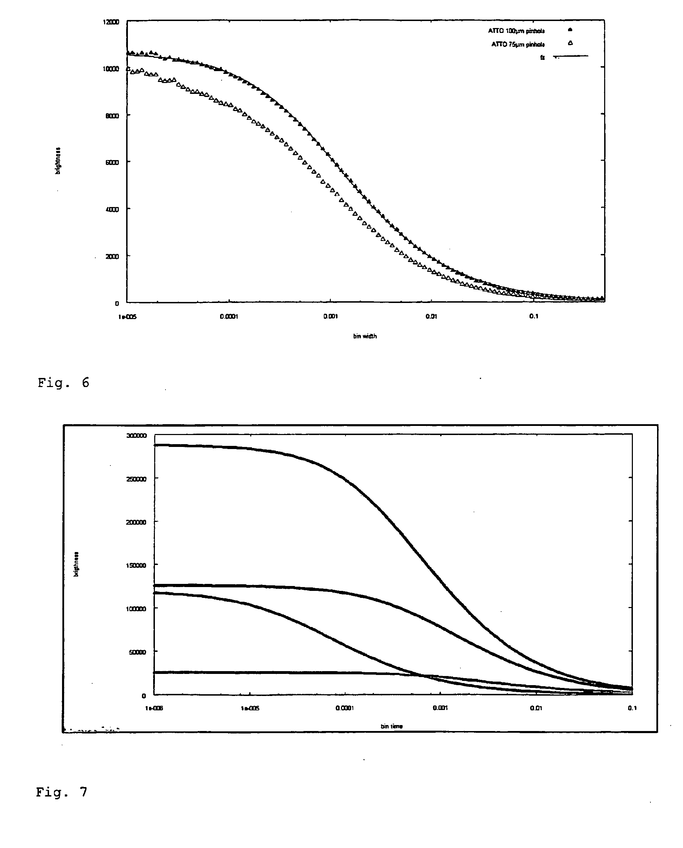

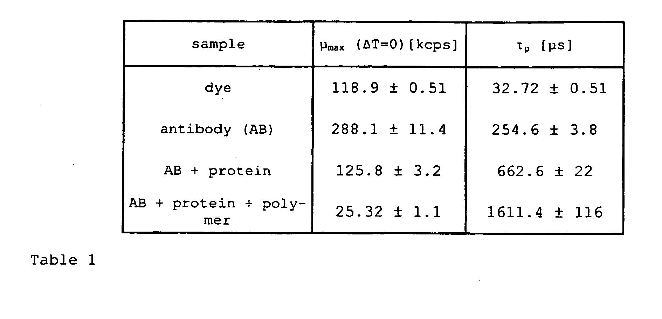

To distinguish different molecular species in a sample the dependency of a characteristic property on the bin time can be utilized. In a first step the characteristic properties and their dependencies on the bin time have to be measured for all possible molecular species in a probe. A typical situation is sketched out in Figure 7 and Table 1.

The brightness function $\mu_{max}(\Delta t)$ has been measured for a fluorescent dye; the parameters $\mu_{max}(\Delta t$ = 0) and $\tau_\mu$ have been determined by a nonlinear fit as described in Example 4. An antibody has been labelled by this dye. Since the antibody is much larger than the dye, the fade out time measured for the labelled antibody is much longer than the fade out time $\tau_\mu$ = 33μs measured for the pure dye. The labeled antibody is distinguishable from the dye by the fade out time but also by its higher brightness value. Most likely each antibody molecule is labeled by two dye molecule; this is indicated by the high brightness value $\mu_{max}(\Delta t$ = 0) of the antibody.

The antibody on the other hand is able to bind to a protein. To characterize the complex antibody + protein, the protein has been given in excess to the sample. Note, that protein molecules are not labelled and dark when not attached to a fluorescent antibody. The longer fade out time $\tau_\mu$ = 663μs correspond to the increased diameter of the complex. The binding of protein reduced the brightness value of the antibody molecule, indicating that the protein displaces one of the two dye molecules.

The protein can bind to a polymer. Adding the polymer in excess to the solution results in a sample containing only the complex antibody + protein + polymer (and dark molecules). Indicated by its long fade-out time $\tau_\mu$ =1611μs this complex is rather large. The reduction of the brightness value can be explained by a rather high population of molecules in the electronic triplet state. Triplet lifetime and population may be obtained by modelling the influence of triplet states on the brightness as described in the literature [Jerker Widengren, Ülo Mets and Rudolf Rigler: Fluorescence Correlation Spectroscopy of Triplet States in Solution: A Theoretical and Experimental Study, Journal of Physical Chemistry, 99, pages 13368-13379(1995)] and applying a nonlinear fitting method.

An appropriate or optimal bin time $\Delta t$ can by chosen to distinguish different complexes at one bin time. Therefore a bin time has to be selected at which the brightness value of each species is well separated from each other. An example is shown in Figure 7 by $\Delta T_1$ at which all components have different brightness values. A bad choice would be $\Delta T_2$, see Figure 7, because the complex antibody + protein + polymer and the dye would have identical brightness at this bin time.

In a mixture of antibody, protein, and polymer the complexes listed in Table 1 may emerge. The dependency of characteristic single molecule properties on the bin time can be utilized to determine the molar concentrations of each of these complexes within a mixture. This is especially important for the measurement of binding constants by standard dilution series. The brightness curve of a sample containing a mixture of S different species with predetermined individual brightness functions $\mu_{max,s}(\Delta t)$, s=1, 2, ..., S is given by:

$$\mu_{max}(\Delta t) = \sum_{s=1}^{S} \mu_{max,s}^2(\Delta t) \cdot X_s / (\sum_{s=1}^{S} \mu_{max,s}(\Delta t) \cdot X_s)$$

The parameters $X_s$ s=1,2,...,S can by determined by a nonlinear fit and describe the relative molar fraction of components s

$$X_s = c_s \cdot / \sum_{i=1}^{S} c_i \quad ,$$

$c_s$ is the concentration of component s. In this example the number of components is four, see Table 1. The four brightness functions shown in Figure 7 have to be applied to obtain the corresponding molar fractions $X_s$ s=1,2,3,4 by a nonlinear fitting algorithm.

**Claims**

1. A method of determining characteristic properties of a sample containing particles of at least one species which emit, scatter and/or reflect photons in an observation volume including the steps of:

   1) registering and counting the number $n_i$ of photon events registered in subsequent time intervals $\Delta t_i = [t_{i-1}, t_i)$

   (i=1,2,3 ... )of an observation time $T = \sum_{i=1}^{N} \Delta t_i$ ,

   2) determining a distribution function p(n) of the number $n$ of photon events in a predetermined time interval $\Delta t$ and
   3) using theoretical relations between the distribution function $p(n)$, the concentration c, a single particle distribution function $P_1(n)$ of the number $n$ of photon events in a predetermined time interval $\Delta t$ expected in a Gedankenexperiment in which each photon event originates solely from a single particle, and an effective volume $V_{eff}$: $=\langle m\rangle/c$, where (m) is the average number of particles contributing to each number of photon events, for determining $P_1(n)$, $V_{eff}$, the concentration c and/or other characteristic properties which can be determined from $V_{eff}$ and/or $P_1(n)$ by fitting these properties to the measured $P_1(n)$

2. The method according to Claim 1, wherein the single particle distribution function $P_1(n)$, based on the theory of Markov processes, is given by

   $$P_1(n) = 1/V_{eff} \int_{R^3} Poi(n, \mu(\vec{r})) \ dV,$$

   with $P_1(n=0)=0$,
   wherein $\mu(\vec{r})$ denotes the brightness function of the particles defined by the average value of photon events by a single particle at position $\vec{r}$, and the Poissonian distribution $Poi(n,\mu) = \exp(-\mu)\mu^n/n!$.

3. The method according to Claim 1 or 2, wherein the particles of the same species are fluorescent or fluorescently labelled and are excited by a laser beam and the maximum value of the brightness function $\mu(\vec{r})$ is determined by the first moment $\nu_1(p)$ and the second moment $\nu_2(p)$ of the distribution function and the noise contribution

   $$\mu_{max} = \frac{\nu_2(p) - \nu_1^2(p) - \nu_1(p)}{\nu_1(p) - \langle n \rangle_{noise}}$$

4. The method according to Claim 1 or 2, wherein the particles of the same species are fluorescent or fluorescently labelled and are excited by a laser beam, a brightness function $\mu(\vec{r})$ is modelled by a superposition of different brightness functions

$$\mu(\vec{r}) = \sum_j a_j \mu_j(\vec{r})$$

with parameters $a_j$ and different brightness functions $\mu_j(\vec{r})$ ($j=1,2,...,K$) and each brightness function $\mu_j(\vec{r})$ ($j=1,2,..., K$) is determined by a given number of $M$ characteristic parameters $\mu_{jk}(k = 1,2,..., M)$.

5. The method according to Claim 4, wherein the characteristic parameters $\mu_{jk}$ ($j=1,2,...,K;k=1,2,...,M$) are determined by standard deconvolution method.

6. The method according to one of the Claims 1 to 5, wherein, based on the theory of Markov processes, the theoretical relation

$$p(n,c) = \sum_{m=0}^{n} Poi(m,\langle m \rangle) P_m(n) ,$$

between the probability distribution function $p(n,c)$ and the single particle distribution function $P_1(n)$ is used, where $P_m(n)$ denotes the mth convolution of the single particle probability distribution $P_1(n)$

$$P_m(n) = \sum_{i=1}^{n-1} P_{m-1}(n-i) P_1(i) , \quad m = 2, 3 \ ...,$$

and $P_0(n)=\delta_{n,0}$.

7. The method according to one of the Claims 1 to 6, wherein the concentration c of particles is determined by the probability to get the count rate zero and the noise contribution $\langle n \rangle_{noise}$:

$$c = \left[ -\ln(p(n = 0, c)) - \langle n \rangle_{noise} \right] / V_{eff} \quad .$$

8. The method according to one of the Claims 1 - 7, wherein the average number of particles $\langle m \rangle$ is determined by the probability to get the count rate zero $p(n=0,c)$ and the noise contribution $\langle n \rangle_{noise}$

$$\langle m \rangle = -\ln(p(n = 0, c)) - \langle n \rangle_{noise} .$$

9. The method according to one of the Claims 1 to 8, wherein the characteristic properties according to step (3) of Claim 1 are determined by the standard method of moments.

10. A method of determining characteristic properties of a sample containing a mixture of $N$ different species of particles , which emit, scatter and/or reflect photons in an observation volume, wherein the overall distribution function $p(n;c_1, c_2,...,c_N)$ of the number n of photon events in a predetermined time interval $\Delta t$ of the mixture is determined by the convolution of the single species contributions $p^{(s)}(n; c_s)$, $s = 1,2,...,N$ :

$$p(n; c_1, c_2, ..., c_N) =$$

$$p^{(1)}(n; c_1) \otimes p^{(2)}(n; c_2) \otimes \cdots \otimes p^{(N)}(n; c_N)$$

$$\otimes Poi(n, \langle n \rangle_{noise}) ,$$

whereby the single species contributions $p^{(s)}(n; c_s)$ are determined by the predetermined effective volumes $V_{eff}^{(s)}$ and single particle distributions $P_1^{(s)}(n)$ for each species s present in the mixture and the given experimental set up, according to one of the Claims 1 to 9.

11. A method of determining characteristic properties $E_1..., E_L$ of a sample containing particles of at least one species which emit, scatter and/or reflect photons in an observation volume including the steps of:

> 1) registering and counting the number $n_i$ of photon events registered in subsequent predetermined time intervals $\Delta t_i = [t_{i-1}, t_i)$ ($i=1,...,N$) of an observation time $T = \sum_{i=1}^{N} \Delta t_i$ , wherein $\Delta t_i =: \Delta t$ = constant,
>
> 2) determining a distribution function $p(n)$ of the number n of photon events in the predetermined time interval $\Delta t$ and
> 3) performing the other steps according to one of the claims 1 to 10; and including the further steps of:
> 4) repeating the steps 1) to 3) K times with different time intervals $\Delta t^k$ ($k=1,...,K$) and determining the same characteristic properties $E_1,...,E_L$ by each series of these steps,
> 5) determining the dependency of the properties $E_1, ..., E_L$ on $\Delta t^k$,
> 6) determining an optimal $\Delta t$ or other characteristic properties of the particles from the measured dependency according to step 5).

12. The method according to claim 11, wherein the measured dependency according to step 5) is compared with already measured dependencies or theoretical functions in order to identify particular species of particles or partial concentrations of particular species of particles in the sample.

13. The method according to claim 12, wherein the distribution function $p(n^k, \Delta t^k)$ ($k=1,...,K$) is measured and the maximal brightness $\mu_{max}(\Delta t^k)$ is determined as a characteristic property from $p(n^k, \Delta t^k)$ by means of an appropriate fitting procedure.

14. The method according to claim 13, wherein, as a further step, $\mu_{max}(\Delta t)$ in the limit $\Delta t \to 0$, the diffusion motion, the diffusion time $\tau_D$ and/or the structural parameter SP of the apparatus are determined from $\mu_{max}(\Delta t)$ by an appropriate fitting function.

15. The method according to claim 13, wherein, in a sample with several species of particles, $\mu_{max}(\Delta t)$ is determined and the molar fractions $X_s$ of the species s in the sample are determined by previously measured or otherwise determined $\mu_{max.s}(\Delta t)$ via the formula

$$\mu_{max}(\Delta t) = \sum_{s=1}^{S} \mu_{max,s}^2(\Delta t) \cdot X_s \ / \ \sum_{s=1}^{S} \mu_{max,s}(\Delta t) \cdot X_s$$

**Patentansprüche**

1. Verfahren zum Bestimmen von charakteristischen Eigenschaften einer Probe, die Partikel mindestens einer Spezies enthält, die Photonen emittieren, streuen und/oder reflektieren, in einem Beobachtungsvolumen, mit folgenden Schritten:

1) Erfassen und Zählen der Anzahl $n_i$ von Photonenereignissen, die in aufeinanderfolgenden Zeitintervallen $\Delta t_i$ = $[t_{i-1}, t_i)$ ($i$=1,2,3 ... ) einer Beobachtungszeit $T = \sum_{i=1}^{N} \Delta t_i$ registriert werden,

2) Bestimmen einer Verteilungsfunktion $p(n)$ der Anzahl $n$ von Photonenereignissen in einem vorgegebenen Zeitintervall $\Delta t$ und

3) Nutzen von theoretischen Beziehungen zwischen der Verteilungsfunktion $p(n)$, der Konzentration $c$, einer Einzelpartikel-Verteilungsfunktion $P_1(n)$ für die Anzahl $n$ von Photonenereignissen in einem vorgegebenen Zeitintervall $\Delta t$, die in einem Gedankenexperiment erwartet wird, in dem jedes Photonenereignis allein von einem einzigen Partikel herrührt, und einem effektiven Volumen $V_{eff}:=\langle m \rangle / c$, wobei $\langle m \rangle$ die durchschnittliche Anzahl der Partikel ist, die zu der jeweiligen Anzahl von Photonenereignissen beitragen, um $P_1(n)$, $V_{eff}$, die Konzentration $c$ und/oder andere charakteristische Eigenschaften zu bestimmen, die aus $V_{eff}$ und/oder $P_1(n)$ durch Fitting dieser Eigenschaften an die gemessene $p(n)$ bestimmt werden können.

2. Verfahren nach Anspruch 1, wobei die Einzelpartikel-Verteilungsfunktion $P_1(n)$, basierend auf der Theorie von Markow-Prozessen, gegeben ist durch

$$P_1(n) = 1/V_{eff} \int_{R^3} Poi(n, \mu(\vec{r})) \ dV,$$

mit $P_1(n=0)=0$,
wobei $\mu(\vec{r})$ die Helligkeitsfunktion der Partikel bezeichnet, die durch den Mittelwert von Photonenereignissen durch ein einzelnes Partikel an der Position $\vec{r}$ definiert ist, und durch die Poisson-Verteilung $Poi(n,\mu) = \exp(-\mu)\mu^n/n!$.

3. Verfahren nach Anspruch 1 oder 2, wobei die Partikel der gleichen Spezies fluoreszieren oder fluoreszierend markiert werden und durch einen Laserstrahl angeregt werden, und wobei der Maximalwert der Helligkeitsfunktion $\mu(\vec{r})$ bestimmt wird durch das erste Moment $\nu_1(p)$ und das zweite Moment $\nu_2(p)$ der Verteilungsfunktion und die Rausch-verteilung

$$\mu_{max} = \frac{\nu_2(p) - \nu_1^2(p) - \nu_1(p)}{\nu_1(p) - \langle n \rangle_{noise}} \ .$$

4. Verfahren nach Anspruch 1 oder 2, wobei die Partikel der gleichen Spezies fluoreszieren oder fluoreszierend markiert werden und durch einen Laserstrahl angeregt werden, wobei eine Helligkeitsfunktion $\mu(\vec{r})$ modelliert wird durch eine Überlagerung unterschiedlicher Helligkeitsfunktionen

$$\mu(\vec{r}) = \sum_j a_j \mu_j(\vec{r})$$

mit Parametern $a_j$ und unterschiedlichen Helligkeitsfunktionen $\mu_j(\vec{r})$ ($j$=1,2,...,$K$), und wobei eine jeweilige Helligkeits-funktion $\mu_j(\vec{r})$ ($j$=1,2,...,$K$) bestimmt wird durch eine gegebene Anzahl $M$ von charakteristischen Parametern $\mu_{jk}$ ($k$=1,2,...,$M$).

5. Verfahren nach Anspruch 4, wobei die charakteristischen Parameter $\mu_{jk}$ ($j$=1,2,...,$K$;$k$=1,2,...,$M$) durch ein standardmäßiges Dekonvolutionsverfahren bestimmt werden.

6. Verfahren nach einem der Ansprüche 1 bis 5, wobei basierend auf der Theorie von Markow-Prozessen die theore-tische Beziehung

$$p(n,c) = \sum_{m=0}^{n} Poi(m,\langle m \rangle) P_m(n) ,$$

zwischen der Wahrscheinlichkeitsverteilungsfunktion $p(n,c)$ und der Einzelpartikel-Verteilungsfunktion $P_1(n)$ verwendet wird, wobei $P_m(n)$ die m-te Faltung der Einzelpartikel-Verteilungsfunktion $P_1(n)$

$$P_m(n) = \sum_{i=1}^{n-1} P_{m-1}(n-i) P_1(i) , \quad m = 2, 3 \ldots,$$

bezeichnet, und mit $P_0(n)=\delta_{n,0}$.

**7.** Verfahren nach einem der Ansprüche 1 bis 6, wobei die Konzentration $c$ von Partikeln bestimmt wird durch die Wahrscheinlichkeit, die Zählrate Null zu erhalten, und durch die Rauschverteilung $\langle n \rangle_{noise}$:

$$c = \left[ -\ln(p(n=0,c)) - \langle n \rangle_{noise} \right] / V_{eff} .$$

**8.** Verfahren nach einem der Ansprüche 1 - 7, wobei die durchschnittliche Anzahl von Partikeln $\langle m \rangle$ bestimmt wird durch die Wahrscheinlichkeit, die Zählrate Null zu erhalten, $p(n = 0,c)$, und durch die Rauschverteilung $\langle n \rangle_{noise}$:

$$\langle m \rangle = -\ln(p(n=0,c)) - \langle n \rangle_{noise} .$$

**9.** Verfahren nach einem der Ansprüche 1 bis 8, wobei die charakteristischen Eigenschaften gemäß Schritt (3) aus Anspruch 1 durch die standardmäßige Momentenmethode bestimmt werden.

**10.** Verfahren zum Bestimmen von charakteristischen Eigenschaften einer Probe, die eine Mischung von N verschiedenen Spezien von Partikeln enthält, die Photonen emittieren, streuen und/oder reflektieren, in einem Beobachtungsvolumen, wobei die Gesamtverteilungsfunktion $p(n; c_1, c_2,...c_N)$ der Anzahl n von Photonenereignissen der Mischung in einem vorgegebenen Zeitintervall $\Delta t$ bestimmt wird durch Faltung der Verteilungen für die einzelnen Spezien, $p^{(s)}(n;c_s)$, s=1,2,...,N :

$$p(n; c_1, c_2,..., c_N) =$$
$$p^{(1)}(n; c_1) \otimes p^{(2)}(n; c_2) \otimes \cdots \otimes p^{(N)}(n; c_N)$$
$$\otimes Poi(n, \langle n \rangle_{noise}) ,$$

wobei die Verteilungen für die einzelnen Spezien $p(s)(n;c_s)$ bestimmt werden durch die vorgegebenen effektiven Volumina $V_{eff}^{(s)}$ und die Einzelpartikel-Verteilungen $P_1^{(s)}(n)$ für jede der in der Mischung vorhandenen Spezien s, und durch den experimentellen Aufbau, und zwar gemäß einem der Ansprüche 1 bis 9.

**11.** Verfahren zum Bestimmen von charakteristischen Eigenschaften $E_1, ..., E_L$ einer Probe, die Partikel mindestens einer Spezies enthält, die Photonen emittieren, streuen und/oder reflektieren, in einem Beobachtungsvolumen, mit folgenden Schritten:

1) Erfassen und Zählen der Anzahl $n_i$ von Photonenereignissen, die in aufeinanderfolgenden Zeitintervallen $\Delta t_i$ =[$t_{i-1},t_i$) ($i$=1,...,$N$) einer Beobachtungszeit $T = \sum_{i=1}^{N} \Delta t_i$ registriert werden, mit $\Delta t_i$ =: $\Delta t$ = const.,

2) Bestimmen einer Verteilungsfunktion p(n) der Anzahl $n$ von Photonenereignissen in dem vorgegebenen Zeitintervall $\Delta t$ und

3) Ausführen der weiteren Schritte gemäß einem der Ansprüche 1 bis 10,

und mit den folgenden weiteren Schritten:

4) K-maliges Wiederholen der Schritte 1) bis 3) mit unterschiedlichen Zeitintervallen $\Delta t^k$ ($k$=1,...,$K$) und Bestimmen der gleichen charakteristischen Eigenschaften $E_1$, ..., $E_L$ durch jede Abfolge dieser Schritte,

5) Bestimmen der Abhängigkeit der Eigenschaften $E_1$, ..., $E_L$ von $\Delta t^k$,

6) Bestimmen eines optimalen $\Delta t$ oder anderer charakteristischer Eigenschaften der Partikel anhand der gemessenen Abhängigkeit gemäß Schritt 5).

**12.** Verfahren nach Anspruch 11, wobei die gemessene Abhängigkeit gemäß Schritt 5) mit bereits gemessenen Abhängigkeiten oder theoretischen Funktionen verglichen wird, um spezielle Spezien von Partikeln oder Partialkonzentrationen spezieller Spezien von Partikeln in der Probe zu identifizieren.

**13.** Verfahren nach Anspruch 12, wobei die Verteilungsfunktion $p(n^k,\Delta t^k)$ ($k$=1,...,$K$) gemessen wird und anhand von $p(n^k,\Delta t^k)$ die maximale Helligkeit $\mu_{max}(\Delta t^k)$ als eine charakteristische Eigenschaft mittels eines geeigneten Fitting-Verfahrens bestimmt wird.

**14.** Verfahren nach Anspruch 13, wobei als ein weiterer Schritt $\mu_{max}(\Delta t)$ mit dem Grenzwert $\Delta t \rightarrow 0$, die Diffusionsbewegung, die Diffusionszeit $\tau_D$ und/oder der Strukturparameter SP der Vorrichtung anhand von $\mu_{max}(\Delta t)$ durch eine geeignete Fitting-Funktion bestimmt werden.

**15.** Verfahren nach Anspruch 13, wobei in einer Probe mit mehreren Spezien von Partikeln $\mu_{max}(\Delta t)$ bestimmt wird, und die molaren Fraktionen $X_s$ der Spezien s in der Probe bestimmt werden durch zuvor gemessene oder anderweitig bestimmte $\mu_{max,s}(\Delta t)$ über die Formel

$$\mu_{max}(\Delta t) = \sum_{s=1}^{S} \mu_{max,s}^2(\Delta t) \cdot X_s \;\; / \;\; \sum_{s=1}^{S} \mu_{max,s}(\Delta t) \cdot X_s \quad .$$

**Revendications**

**1.** Procédé permettant de déterminer des propriétés caractéristiques d'un échantillon contenant des particules d'au moins une espèce qui émettent, dispersent et/ou reflètent des photons dans un volume d'observation, le procédé comprenant les étapes suivantes:

1) registrer et compter le nombre $n_i$ d'évènements photoniques registrés dans des intervalles de temps subséquents $\Delta t_i$ =[$t_{i-1},t_i$) ($i$ =1,2,3...) d' un temps d'observation $T = \sum_{i=1}^{N} \Delta t_i$ ,

2) déterminer une fonction de distribution p(n) d'un nombre $n$ d'évènements photoniques dans un intervalle de temps prédéterminé $\Delta t$ et

3) utiliser des relations théoriques entre la fonction de distribution p(n), la concentration c, une fonction de distribution de particules discrètes $P_1(n)$ du nombre $n$ d'évènements photoniques dans un intervalle de temps prédéterminé $\Delta t$ attendu dans une expérience de pensée, dans laquelle chaque évènement photonique est originaire seulement d'un particule discrète, et un volume effective $V_{eff} :=\langle m \rangle /c$, où $\langle m \rangle$ est le nombre moyen de particules contribuant à chaque nombre d'évènements photoniques, pour déterminer $P_1(n)$, $V_{eff}$, la concentration c et/ou autres propriétés caractéristiques qui peuvent être déterminées de $V_{eff} P_1(n)$ en ajustant ces propriétés auxquelles mesurées p(n).

2. Procédé selon la revendication 1, dans lequel la fonction de distribution de particules discrètes, $P_1(n)$, basée sur la théorie de procédés de Markov, est donnée par

$$P_1(n) = 1/V_{eff} \int_{R^3} Poi(n, \mu(\vec{r}))\ \mathrm{dV},$$

où $P_1(n{=}0){=}0$,
où $\mu(\vec{r})$ dénote la fonction de luminosité des particules définie par la valeur moyenne des évènements photoniques par une particule discrète à une position $\vec{r}$, et la loi de distribution Poisson $Poi(n,\mu) = \exp(\mu)\mu^n/n!$.

3. Procédé selon la revendication 1 ou 2, dans lequel les particules de la même espèce sont fluorescentes ou étiquetées comme fluorescentes et sont excitées par rayon laser, et la valeur maximale de la fonction de luminosité $\mu(\vec{r})$ est déterminée par le premier moment $v_1(p)$ et le deuxième moment $v_2(p)$ de la fonction de distribution et la contribution du bruit

$$\mu_{max} = \frac{v_2(p) - v_1^2(p) - v_1(p)}{v_1(p) - \langle n \rangle_{noise}}$$

4. Procédé selon la revendication 1 ou 2, dans lequel les particules de la même espèce sont fluorescentes ou étiquetées comme fluorescentes et sont excitées par rayon laser, une fonction de luminosité $\mu(\vec{r})$ étant modelée par une superposition des fonctions de luminosité différentes

$$\mu(\vec{r}) = \sum_j a_j \mu_j(\vec{r})$$

avec des paramètres $a_j$ et des fonctions de luminosité différentes $\mu_j(\vec{r})$ $(j{=}1,2,...,K)$ et chaque fonction de luminosité $\mu_j(\vec{r})$ $(j = 1,2,...,K)$ étant déterminée par un nombre donné de $M$ paramètres caractéristiques $\mu_{jk}$ $(k = 1,2,...,M)$.

5. Procédé dans lequel les paramètres caractéristiques, $\mu_{jk}$ $(j = 1,2,..., K; k{=}1,2,...,M)$ sont déterminés en utilisant la méthode de déconvolution standard.

6. Procédé selon l'une des revendications 1 à 5, dans lequel, basé sur la théorie de processus de Markov, on utilise la relation théorique

$$p(n,c) = \sum_{m=0}^{n} Poi(m, \langle m \rangle) P_m(n) ,$$

entre la fonction de distribution de probabilité $p(n,c)$ et la fonction de distribution de particules discrètes $P_1(n)$, où $P_m(n)$ dénote la m-ième convolution de la distribution de probabilité de particules discrètes $P_1(n)$

$$P_m(n) = \sum_{i=1}^{n-1} P_{m-1}(n-i) P_1(i) , \quad m = 2,3 ... ,$$

et $P_0(n) = \delta_{n,0}$.

7. Procédé selon l'une des revendications 1 à 6, dans lequel la concentration c de particules est déterminée par la probabilité d'obtenir le taux de comptage zéro et la contribution du bruit $\langle n \rangle_{noise}$ :

$$c = \left[ -\ln(p(n=0,c)) - \langle n \rangle_{noise} \right] / V_{eff} \quad .$$

**8.** Procédé selon l'une des revendications 1 à 7, dans lequel le nombre moyen de particules (m) est déterminé par la probabilité d'obtenir le taux de comptage zéro $p(n=0,c)$ et la contribution du bruit $\langle n \rangle_{noise}$

$$\langle m \rangle = -\ln(p(n=0,c)) - \langle n \rangle_{noise} \quad .$$

**9.** Procédé selon l'une des revendications 1 à 8, dans lequel les propriétés caractéristiques selon l'étape (3) de la revendication 1 sont déterminées en utilisant la méthode des moments standard.

**10.** Procédé permettant de déterminer des propriétés caractéristiques d'un échantillon contenant une mélange de N espèces différentes de particules émettant, dispersant et/ou réflétant des photons dans un volume d'observation, dans lequel la fonction de distribution totale $p(n;c_1,c_2,...,c_N)$ du nombre n des évènements photoniques dans un intervalle de temps prédéterminé $\Delta t$ de la mélange est déterminée par la convolution des contributions des particules discrètes $p^{(s)}(n;c_s)$, $s=1,2,...,N$ :

$$p(n;c_1,c_2,...,c_N) =$$
$$p^{(1)}(n;c_1) \otimes p^{(2)}(n;c_2) \otimes \cdots \otimes p^{(N)}(n;c_N)$$
$$\otimes Poi(n,\langle n \rangle_{noise}) \, ,$$

les contributions des espèces discrètes $p_{(s)}(n;c_s)$ étant déterminées par les volumes effectifs prédéterminés $V_{eff}^{(s)}$ et les distributions des particules discrètes $P_1^{(s)}(n)$ pour chaque espèce s présente dans la mélange et le montage expérimental donné, selon l'une des revendications 1 à 9.

**11.** Procédé permettant de déterminer des propriétés caractéristiques d'un échantillon contenant des particules d'au moins une espèce qui émettent, dispersent et/ou reflètent des photons dans un volume d'observation, le procédé comprenant les étapes suivantes :

1) registrer et compter le nombre $n_i$ d'évènements photoniques registrés dans des intervalles de temps prédé-

terminés subséquents $\Delta t_i = [t_{i-1},t_i)$ $(i = 1,2,3...)$ d'un temps d'observation $T = \sum_{i=1}^{N} \Delta t_i$ , où $\Delta t_i =: \Delta t$ = constant,

2) déterminer une fonction de distribution p(n) d'un nombre $n$ d'évènements photoniques dans un intervalle de temps prédéterminé $\Delta t$ et
3) procéder aux autres étapes selon l'une des revendications 1 à 10 ;
et inclure les autres étapes suivantes :
4) répéter les étapes 1) à 3) K fois avec des intervalles de temps différents $\Delta t^k$ $(k=1,...,K)$ et déterminer les mêmes propriétés caractéristiques $E_1,...,E_L$ par chaque série de ces étapes,
5) déterminer la dépendance des propriétés $E_1,...,E_L$ de $\Delta t^k$,
6) déterminer un $\Delta t$ optimum ou autres propriétés caractéristiques des particules de la dépendance mesurée selon l'étape 5).

**12.** Procédé selon la revendication 11, dans lequel la dépendance selon l'étape 5) est comparée avec des dépendances déjà mesurées ou avec des fonctions théoriques pour identifier des espèces particulières de particules ou des concentrations partielles des espèces particulières de particules dans l'échantillon.

**13.** Procédé selon la revendication 12, dans lequel la fonction de distribution $p(n^k,\Delta t^k)$ $(k=1,...,K)$ est mesurée et la luminosité maximale $\mu_{max}(\Delta t^k)$ est déterminée comme une propriété caractéristique, de $p(n^k,\Delta t^k)$ au moyen d'une procédure de fitting appropriée.

**14.** Procédé selon la revendication 13, dans lequel, comme une autre étape, $\mu_{max}(\Delta t)$ dans la limite $\Delta t \rightarrow 0$, le mouvement de diffusion, le temps de diffusion $\tau_D$ et/ou le paramètre structurel SP du dispositif sont déterminés de $\mu_{max}(\Delta t)$ au moyen d'une fonction de fitting appropriée.

**15.** Procédé selon la revendication 13, dans lequel, dans un échantillon avec des espèces de particules différentes, $\mu_{max}(\Delta t)$ est déterminé et les fractions $X_s$ des espèces s dans l'échantillon sont déterminées par $\mu_{max,s}(\Delta t)$ précédemment mesuré ou autrement déterminé via la formule

$$\mu_{\max}(\Delta t) = \sum_{s=1}^{S} \mu_{\max,s}^{2}(\Delta t) \cdot X_s \ / \ \sum_{s=1}^{S} \mu_{\max,s}(\Delta t) \cdot X_s$$

Fig. 1

Fig. 2

28

Fig. 3

Fig. 4

Fig. 5

Fig. 6

Fig. 7

| sample | $\mu_{max}$ $(\Delta T=0)$ [kcps] | $\tau_\mu$ [µs] |
|---|---|---|
| dye | 118.9 ± 0.51 | 32.72 ± 0.51 |
| antibody (AB) | 288.1 ± 11.4 | 254.6 ± 3.8 |
| AB + protein | 125.8 ± 3.2 | 662.6 ± 22 |
| AB + protein + poly-mer | 25.32 ± 1.1 | 1611.4 ± 116 |

Table 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9816814 A

- EP 1630547 A

### Non-patent literature cited in the description

- **L. MANDEL.** Fluctuations of photon beams and their correlations. *Proc. Phys. Soc.,* 1958, vol. 72, 1037-1048
- **PEET KASK ; KAUPO PALO ; DIRK ULLMANN ; KARSTEN GALL.** Fluorescence-intensity distribution analysis and its application in biomolecular detection technology. *Proc. Natl. Acad. Sci. USA,* 1999, vol. 96, 13765-13761
- **KAOPO PALO ; ÜLO METS ; STEFAN JÄGER ; PEET KASK ; KARSTEN GALL.** Fluorescence intensity multiple distribution analysis: Concurrent determination of diffusion times and molecular brightness. *Biophysical J.,* 2000, vol. 79, 2858-2866
- **KAOPO PALO ; ÜLO METS ; VELLO LOORITS ; PEET KASK.** Calculation of photon count number distributions via master equatons. *Biophysical J.,* 2006, vol. 90, 2179-2191
- **YAN CHENG ; D. MÜLLER JOACHI ; PETER T. C. SO ; ENRICO GRATTON.** The photon counting histogram in fluorescence fluctuation spectroscopie. *Biophysical J.,* 1999, vol. 77, 553-557
- **YAN CHENG.** Analysis and applications of fluorescence fluctuation spectroscopy. *PhD thesis,* 1999, www.lfd.uiuc.edu/staff/gratton
- **THOMAS D. PERROUD ; BO HUANG ; RICHARD N.** Zare: Effect on bin time on the photon counting histogram for one-photon excitation. *ChemPhysChem,* 2005, vol. 6, 905, 912
- **Y. CHENG ; M. TEKMEN ; L. HILLESHEIM ; J. SKINNER ; B. WU ; J. MÜLLER.** Dual-color photon counting histogram. *Biophysical J.,* 2005, vol. 88, 2177-2192
- **LARS KASTRUP ; HANS BLOM ; CHRISTIAN EGGELING ; STEFAN W.** Hell: Fluorescence fluctuation spectroscopy in subdiffraction focal volume. *Phys. Rev. Lett.,* 2005, vol. 94
- **YAN CHENG ; JOACHIM D. MÜLLER ; PETER T. C. SO ; ENRICO GRATTON.** The photon counting histogram in fluorescence fluctuation spectroscopie. *Biophysical J.,* 1999, vol. 77, 553-557

- **BO HUANG ; ZHOMAS D. PERROUD ; RICHARD N. ZARE.** Photon counting histogram: One-photon excitation. *ChemPhysChem,* 2004, vol. 5, 1323-1331
- **BRUNO KLAHN ; WERNER A.** Bingel: The convergence of the Raleigh-Ritz Method in Quantum Chemistry. *Theoret. Chim. Acta,* 1977, vol. 44, 9-43
- Adaptive Discrete Galerkin Methods for Macromolecular Processes. **P. DEUFLHARD ; J. ACKERMANN.** Advances in Computational Mathematics. World Scientific Publishing Co., Inc, 1993
- **J. ACKERMANN ; M. WULKOW.** MACRON - A Program Package for Macromolecular Reaction Kinetics. *Konrad-Zuse-Zentrum, Preprint SC-90-14,* 1990
- **M. WULKOW ; J. ACKERMANN.** Numerical Simulation of Macromolecular Kinetics - Recent Developments. *IU-PAC Working Party, Macro group,* 1990
- **M. WULKOW ; J. ACKERMANN.** The Treatmeant of Macromolecular Processes with Chain-Length-Dependent Reaction Coefficients - An Example from Soot Formation. *Konrad-Zuse-Zentrum Berlin, Preprint-91-18,* 1991
- **U. BUDDE ; M. WULKOW.** Computation of molecular weight distributions for free radical polymerization systems. *Chem. Ing. Sci.,* 1991, vol. 46, 497-508
- **M. WULKOW.** Numerical Treatment of Countable Systems of Ordinary Differential Equations. *Thesis and Technical Report-90-8, Konrad-Zuse-Zentrum Berlin,* 1990
- **M. WULKOW.** Adaptive Treatment of Polyreactions in Weighted Sequence Spaces. *IMPACT Comput. Sci. Engrg.,* 1992, vol. 4, 152-193
- **VAN CRAENENBROECK ; G. MATTHYS ; J. BEIRLANT ; Y. ENGELBORGHS.** A statistical analysis of fluorescence correlation data. *Journal of Fluorescence,* 1999, vol. 9, 325-331
- **THOMAS D. PERROUD ; BO HUANG ; RICARD N. ZARE.** Effect of bin time on the photon counting histogram for one-photon excitation. *ChemPhysChem,* 2005, vol. 6, 905-912

- **KAUPO PALO ; ÜLO METS ; STEFAN JÄGER ; PEET KASK ; KARSTEN GALL.** Fluorescence intensity multiple distributions analysis: Concurrent determination of diffusion times and molecular brightness. *Biophysical Journal,* 2000, vol. 79, 2858-2866

- **JERKER WIDENGREN ; ÜLO METS ; RUDOLF RIGLER.** Fluorescence Correlation Spectroscopy of Triplet States in Solution: A Theoretical and Experimental Study. *Journal of Physical Chemistry,* 1995, vol. 99, 13368-13379